# EUROPÄISCHE PATENTSCHRIFT

(11) **EP 2 779 536 B1**
(45) Veröffentlichungstag und Bekanntmachung des Hinweises auf die Patenterteilung: **01.08.2018**
(21) Anmeldenummer: 14000804.6
(22) Anmeldetag: 06.03.2014
(51) Int. Cl.: H04L 12/58

(54) **Verfahren und Vorrichtung zur Verwaltung von Kommunikationsvorgängen**
Method and device for managing communication processes
Procédé et dispositif d'administration de processus de communication

(30) Priorität: 12.03.2013 DE 102013004363
(43) Veröffentlichungstag der Anmeldung: 17.09.2014
(73) Patentinhaber: Unify GmbH & Co. KG, 80807 München (DE)
(72) Erfinder: Lederer, Thomas, 82211 Herrsching (DE)
(74) Vertreter: Fritzsche, Thomas

(56) Entgegenhaltungen:
- US-A1- 2004 133 810
- US-A1- 2011 159 854
- US-A1- 2011 207 484

## Beschreibung

Die Erfindung betrifft ein Verfahren und eine Vorrichtung zur Verwaltung von Kommunikationsvorgängen.

In Kommunikationsnetzen mit mehreren internen Teilnehmern, wie beispielsweise, aber nicht nur, in größeren Unternehmen, ist die Kommunikation mit externen Partnern wie etwa Geschäftspartnern, Kunden etc. oft unübersichtlich. Externe Personen können dies ausnutzen, indem sie gezielt verschiedene potentielle interne Ansprechpartner ansprechen oder anschreiben, um sich aufgrund unterschiedlicher, möglicherweise inkonsistenter Antworten einen Vorteil zu verschaffen. Dabei kann es in herkömmlichen Kommunikationssystemen vorkommen, dass eine externe Person E mit mehreren internen Personen A, B, C, ... kommuniziert oder umgekehrt mehrere interne Personen mit derselben externen Person E kommunizieren, ohne dass die internen Personen A, B, C, ... voneinander bzw. von deren Kommunikation mit der externen Person E Kenntnis haben. Die externe Person E kann somit unterschiedliche, nicht abgestimmt Informationen erhalten. Es ist daher für die externe Person E leicht, diesen Umstand auszunutzen, indem sie beispielsweise Anfragen als separate elektronische Nachrichten (e-Mails oder dergleichen) getrennt an die Personen A, B, C, ... schickt.

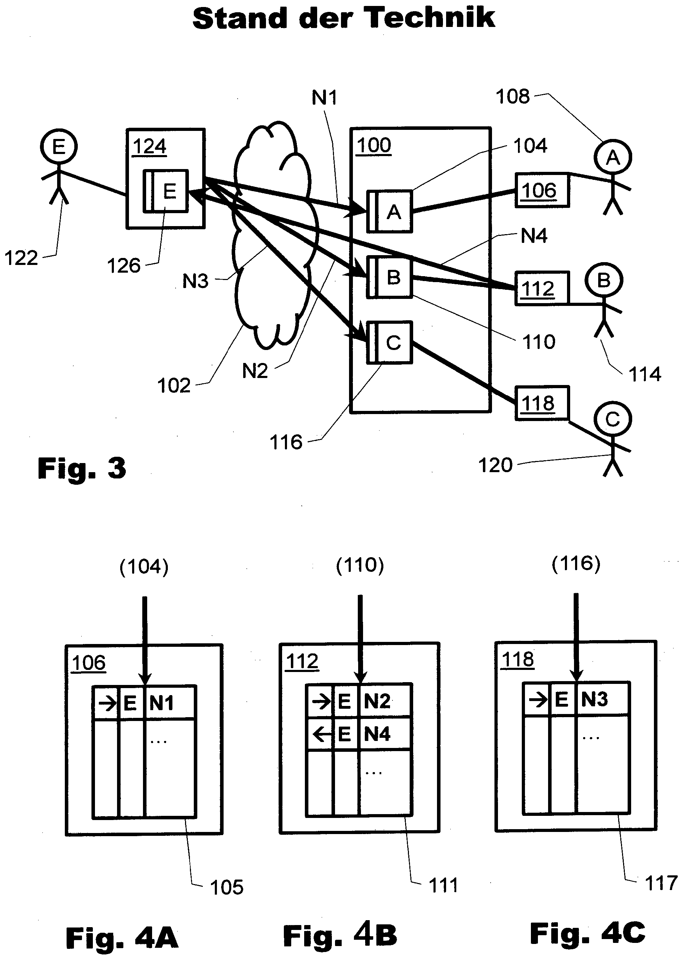

Eine solche Konstellation ist in Fig. 3 dargestellt. Gemäß der Darstellung in Fig. 3 ist ein Mail-Server 100 eines Firmennetzes einer Firma XYZ vorgesehen, der über nicht näher dargestellte Mittel wie etwa einem Gateway oder dergleichen mit dem Internet 102 verbunden ist. Der Mail-Server 100 verwaltet ein Postfach 104, auf welches ein Mail-Client 106 zugreifen kann. Der Mail-Client 106 ist beispielsweise in einem Arbeitsplatzrechner eingerichtet, auf welchem eine Person 108 (Person A) ein Benutzerprofil besitzt. Statt auf einem Arbeitsplatzrechner kann der Mail-Client 106 auch auf einem Smartphone, Tablet oder Laptop oder sonstigen Gerät eingerichtet sein. Im Folgenden wird das Postfach 104 auch als Postfach der Person A bezeichnet, da es exklusiv für die Person A (108) eingerichtet und dieser zugeordnet ist. Das Postfach 104 kann von außen über das Internet 102 beispielsweise mit der Adresse personA@firmaXYZ.com angesprochen werden. Gleichermaßen verwaltet der Mail-Server 100 ein Postfach 110, auf welches ein Mail-Client 112 einer Person 114 (Person B) zugreifen kann und welches beispielsweise mit der Adresse personB@firmaXYZ.com angesprochen werden kann, und ein Postfach 116, auf welches ein Mail-Client 118 einer Person 120 (Person C) zugreifen kann und welches beispielsweise mit der Adresse personC@firmaXYZ.com angesprochen werden kann. Eine externe Person 122 (Person E) besitzt über nicht näher dargestellte Mittel Zugriff auf einen Mail-Server 124 mit einem Postfach 126, das beispielsweise mit der Adresse personE@fremderServer.net angesprochen werden kann. In der dargestellten Situation sendet die Person E drei Nachrichten N1, N2, N3 mittels des Servers 124 und unter Verwendung der Adressen der Postfächer 104, 110, 116 der internen Personen A, B, C über das Internet. Die Nachrichten N1, N2, N3 werden im Mail-Server 100 empfangen und den Postfächern 104, 110, 116 zugeordnet bzw. dort abgelegt. D.h., die Nachricht N1 wird in dem Postfach 104 der Person A abgelegt, die Nachricht N2 wird in dem Postfach 110 der Person B abgelegt, und die Nachricht N3 wird in dem Postfach 116 der Person B abgelegt. Die Person B antwortet auf die Nachricht N2 mit einer Nachricht N4.

In Fign. 4A bis 4C ist der Sachverhalt aus der Sichtweise der Personen A, B, C, genauer gesagt, die Sichtweise der Person A auf eine durch den Mail-Client 106 dargestellte Nachrichtenliste (Postbox) 105 des Postfachs 104, die Sichtweise der Person B auf eine durch den Mail-Client 112 dargestellte Nachrichtenliste (Postbox) 111 des Postfachs 110, und die Sichtweise der Person C auf eine durch den Mail-Client 118 dargestellte Nachrichtenliste (Postbox) 117 des Postfachs 116, jeweils genauer dargestellt. Wie in Fig. 4A veranschaulicht, erscheint in der Nachrichtenliste 105 der Person A nur die an die Person A gerichtete Nachricht N1; wie in Fig. 4B veranschaulicht, erscheint in der Nachrichtenliste 111 der Person B nur die an die Person B gerichtete Nachricht N2 sowie deren Antwort (Nachricht) N4 an die externe Person E; und wie in Fig. 4C veranschaulicht, erscheint in der Nachrichtenliste 117 der Person C nur die an die Person C gerichtete Nachricht N3. Somit haben die Personen A, B, C keine Kenntnis, dass auch an die jeweiligen beiden anderen Personen eine Nachricht gesendet wurde, und keine der Personen A und C kann die Antwort N4 der Person B sehen.

Um dieses Problem zu umgehen, werden bisher verschiedene Umgehungslösungen eingesetzt.

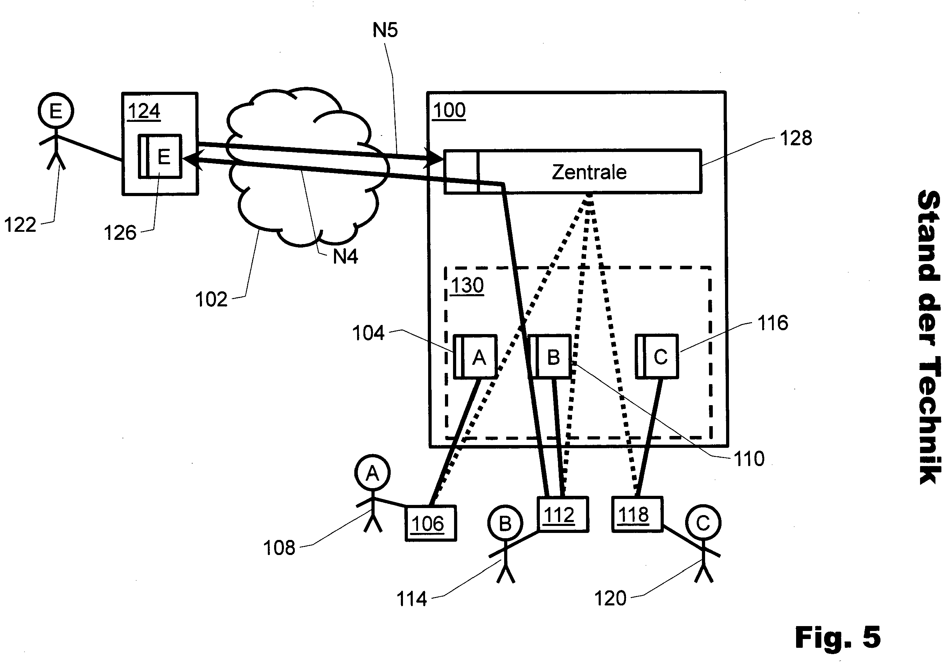

In Fig. 5 ist ein Fall veranschaulicht, bei welchem in dem zuvor beschriebenen Mail-Server 100 ein zentrales Postfach 128 eingerichtet ist, das über das Internet 102 von außen mit der Adresse Zentrale@firmaXYZ.com ansprechbar ist. Ferner ist ein interner Bereich 130 definiert, in welchem die personenbezogenen Postfächer 104, 110, 116 der Personen A, B, C eingerichtet sind. Der interne Bereich 130 ist von extern über das Internet nicht ansprechbar, vielmehr dienen die Postfächer 104, 110, 116 nur der internen Kommunikation innerhalb der Firma XYZ. Anders als in Fig. 3 haben die Mail-Clients 106, 112, 118 der Personen A, B, C nicht nur Zugriff auf die eigenen Postfächer 104, 110, 116, sondern auch zumindest Lesezugriff auf das zentrale Postfach 128. D. h., alle internen Personen A, B, C können eine über das Internet an das zentrale Postfach 128 gerichtete und dort abgelegte Nachricht N5 lesen. In dieser Konstellation werden von außen an die internen Postfächer 104, 110, 116 gerichtete Nachrichten abgewiesen. Alternativ kann auch vorgesehen sein, dass alle von außen an die internen Postfächer 104, 110, 116 gerichteten Nachrichten auf das zentrale Postfach 128 laufen; dies kann aber aufgrund von Problemen hinsichtlich der Privatsphäre der Personen A, B, C unerwünscht sein. Nach extern gerichtete Nachrichten können mit der Kennung des zentralen Postfachs 128 versehen werden, sodass die persönlichen Postfächer 104, 110, 116 nach extern verschleiert bleiben.

Eine solche Lösung gemäß Fig. 5 kann von externen Personen wie die Person E als unpersönlich empfunden werden und ein Hemmnis für eine Kontaktaufnahme bilden. Anstelle eines zentralen Postfachs können auch mehrere Gruppenpostfächer für unterschiedliche Abteilungen oder Arbeitsgruppen innerhalb der Firma XYZ eingerichtet sein, die jeweils für einen eingeschränkten Personenkreis sichtbar sind. Abgesehen von dem erhöhten Verwaltungsaufwand bei der Zuordnung der Zugriffsrechte ist das Problem des unpersönlichen Erscheinungsbilds nach außen aber im Wesentlichen unverändert. Auch ist es für Außenstehende schwierig, die richtige Gruppenadresse zuzuordnen, wenn eine bestimmte Person innerhalb der Firma XYZ kontaktiert werden soll.

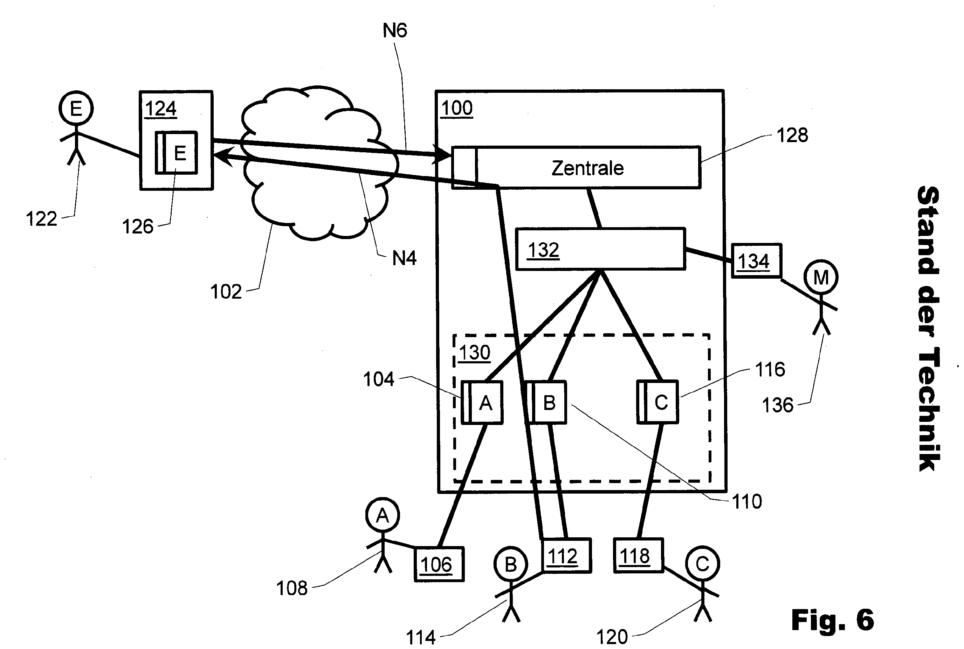

In einer in Fig. 6 veranschaulichten Abwandlung der vorstehend beschriebenen Lösung wird das zentrale Postfach 128 zusätzlich durch eine Verwaltungsinstanz 132, auf die über einen Verwaltungs-Client 134, der beispielsweise in einem Arbeitsplatzrechner eingerichtet ist, ein Manager 136 (Person M) zugreifen kann, verwaltet. Über die Verwaltungsinstanz 132 wird die Weiterleitung von Nachrichten, die - etwa über das Internet 102 - an das zentrale Postfach 128 gelangt sind, zentral koordiniert. D. h., der Verwaltungs-Client 132 und/oder der Administrator 136 entscheiden anhand von Nachrichtenkopfelementen oder Inhalten einer eingehenden Nachricht N6, an welches interne Postfach 104, 110 und/oder 116 die Nachricht N6 weiterzuleiten ist. Diese Lösung wahrt zwar die Privatsphäre der Personen A, B, C untereinander, ist aber nach außen hin ebenso unpersönlich und erfordert einen hohen personellen Aufwand und hohe Wachsamkeit, da dies nicht immer automatisiert werden kann.

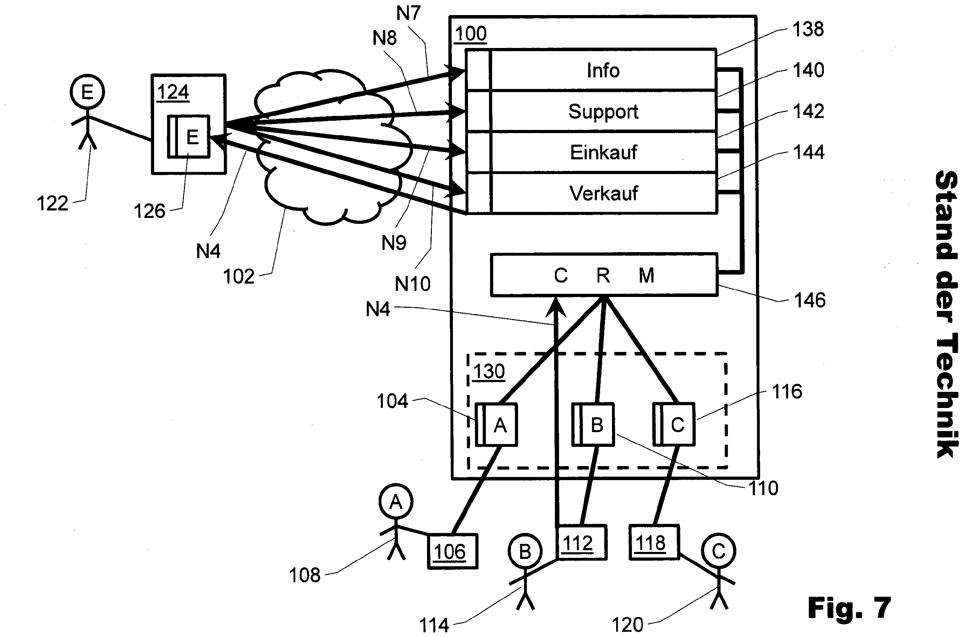

Fig. 7 zeigt ein ähnliches System, bei welchem eine Vielzahl von Gruppenpostfächern 138, 140, 142, 144 eingerichtet sind, die mittels ihrer jeweilige Gruppen-E-Mail-Adresse wie z. B. info@firmaXYZ.com, support@firmaXYZ.com, einkauf@firmaXYZ.com, verkauf@firmaXYZ.com von extern über das Internet 102 ansprechbar sind. Die Gruppenpostfächer 138-144 werden über ein Kundenbeziehungs-Managementsystem (CRM-System) 146 verwaltet. Dabei wird den internen Personen A, B, C über ein beispielsweise web-basiertes System die Möglichkeit gegeben, sämtliche Anfragen und Antworten über die Gruppenpostfächer 138-144 zu sehen. Selbst wenn die externe Person E mehrere Nachrichten N7-N10 an die jeweiligen Gruppenpostfächer 138-144 absetzt, werden diese über das CRM zusammengeführt und nach intern transparent gemacht. Die Antwort N4 der Person B wird von dem CRM-System 146 mit der für die Person B zutreffenden Gruppen-E-Mail-Adresse (im dargestellten Beispiel verkauf@firmaXYZ.com) als Absender versehen und über das Internet an die Person E gesendet. Der Einsatz des CRM-Systems 146 ist allerdings aufwändig und deckt persönliche E-Mail-Adressen nicht ab.

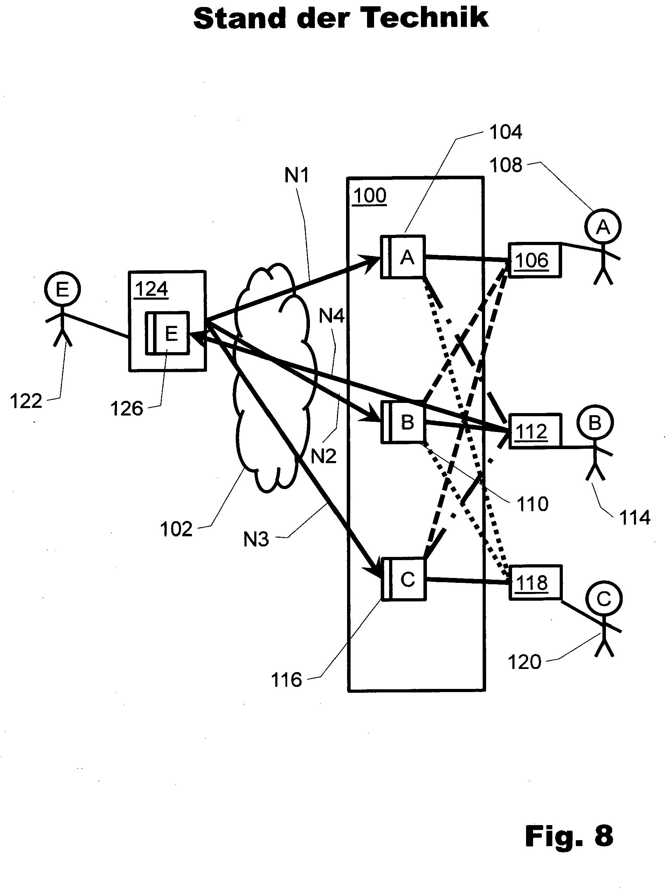

Eine andere bekannte Umgehungslösung, die in Fig. 8 veranschaulicht ist, besteht darin, die persönlichen Postfächer 104, 110, 116 von extern ansprechbar zu belassen, aber intern wechselweise zumindest Leserechte auf andere persönliche Postfächer zu erlauben. Wie in Fig. 8 dargestellt, hat der Mail-Client 106 der internen Person 108 (Person A) direkten Zugriff auf das eigene Postfach 104 (vgl. durchgezogene Linie zwischen dem Mail-Client 106 und dem Postfach 104), kann also eingehende und ausgehende Nachrichten, die in diesem Postfach abgelegt sind, sehen bzw. für die Person A darstellen sowie Nachrichten, welche die Person A eingibt, zum Versand an das Postfach 104 der Person A leiten, woraufhin der Mail-Server 100 die Nachricht mit einem Nachrichtenkopf einschließlich der Postfachadresse des Postfachs 104 versieht und die Nachricht versendet. Gleichzeitig hat der Mail-Client 106 Lesezugriff auf die Postfächer 110, 116 der Personen B und C (vgl. gestrichelte Linien zwischen dem Mail-Client 106 und den Postfächern 110, 116), kann also eingehende und ausgehende Nachrichten, die in jenen Postfächern 110, 116 abgelegt sind, sehen und für die Person A darstellen. Gleiches gilt sinngemäß für die Kommunikation der Personen B und C, d.h., der Mail-Client 112 der Person 114 (Person B) hat direkten Zugriff auf das eigene Postfach 110 (durchgezogene Linie) und Lesezugriff auf die Postfächer 104, 116 (strichpunktierte Linien) der Personen A und C, und der Mail-Client 118 der Person 120 (Person C) hat direkten Zugriff auf das eigene Postfach 116 (durchgezogene Linie) und Lesezugriff auf die Postfächer 104, 110 (punktierte Linien) der Personen A und B. Eine solche Lösung ist mit einem Verlust der Privatsphäre verbunden und unterliegt auch dem Problem, dass zwar prinzipiell relevante Nachrichten zu externen Personen auf anderen persönlichen Postfächern gefunden werden können, dies bei jedem Kommunikationsakt aber einen gezielten Suchakt erfordert.

Eine rein manuelle Lösung besteht darin, eine ausgehende Nachricht intern zu "teilen", indem etwa der Verteilerkreis vergrößert wird. Hierzu werden bestehende Funktionen von E-Mail-Programmen wie CC (Kopie) oder BCC (Blindkopie) genutzt. Das CC-Verfahren hat aber den Nachteil, dass dabei auch der Verteilerkreis nach außen hin offengelegt wird. Das BCC-Verfahren, das dieses vermeidet, erhöht andererseits die interne Intransparenz, da keiner der internen Empfänger weiß, wer diese Nachricht noch erhalten hat. Daneben erfordern diese Lösungen erhöhte Disziplin und Aufmerksamkeit, um bei jedem Kommunikationsvorgang konsequent den richtigen Verteiler auszuwählen.

In US2011159854 wird vorgeschlagen, dass ein Remote-Server von einer ersten Kommunikationseinrichtung, die einem ersten Benutzer zugeordnet ist, Informationen über ein erstes Kommunikationsereignis zwischen dem ersten Benutzer und einem anderen Teilnehmer empfängt. Der Remote-Server kann die Information über das erste Kommunikationsereignis speichern und auch von einem zweiten Kommunikationsgerät, das einem zweiten Benutzer zugeordnet ist, eine Anforderung empfangen, die der anderen Partei zugeordnet ist. Als Reaktion auf die Anforderung kann der Remote-Server Informationen über das erste Kommunikationsereignis abrufen und zu dem zweiten Kommunikationsgerät übertragen.

Zusammengefasst leiden die bisher eingesetzten Umgehungslösungen wenigstens teilweise unter den Nachteilen, dass sie beispielsweise ein unpersönliches Bild nach außen geben oder ein strenges, konsequentes Handeln der beteiligten Personen erfordern.

Es ist eine Aufgabe der vorliegenden Erfindung, die Nachteile im Stand der Technik wenigstens teilweise zu beseitigen. Insbesondere besteht eine Aufgabe der vorliegenden Erfindung darin, eine nach innen transparente, konsistente Kommunikationsverarbeitung mit externen Teilnehmern zu schaffen, die von extern nicht transparent ist.

Die Aufgabe wird erfindungsgemäß zumindest in Teilaspekten durch die Merkmale der unabhängigen Ansprüche gelöst. Vorteilhafte Ausführungsformen und Weiterentwicklungen der Erfindung sind in den Unteransprüchen angegeben.

Gemäß einem Gesichtspunkt der Erfindung wird ein Verfahren zur Verwaltung von Kommunikationsvorgängen zwischen internen Teilnehmern eines internen Kommunikationsnetzes einerseits und externen Teilnehmern andererseits vorgeschlagen, wobei das Verfahren in dem internen Kommunikationsnetz abläuft und die Schritte umfasst:
Anlegen einer Liste in dem internen Kommunikationsnetz zur Auflistung von eingehenden und ausgehenden Kommunikationsvorgängen zwischen den internen Teilnehmern und wenigstens einem externen Teilnehmer als virtuelles Postfach, das dem wenigstens einen externen Teilnehmer zugeordnet ist, wobei das virtuelle Postfach für den wenigstens einen externen Teilnehmer unsichtbar oder unzugänglich in einem internen Bereich (230) des internen Kommunikationsnetzes angelegt wird, so dass die Möglichkeit einer internen Abstimmung der internen Teilnehmer nach außen verschleiert werden kann;

Erkennen eines Kommunikationsvorgangs zwischen wenigstens einem internen Teilnehmer und dem wenigstens einen externen Teilnehmer als dem wenigstens einen externen Teilnehmer zugehörig anhand einer dem Kommunikationsvorgang entnehmbaren, dem wenigstens einen externen Teilnehmer zuordenbaren Kennung; Ablegen jedes Kommunikationsvorgangs, der als dem externen Teilnehmer zugehörig erkannt wurde, in dem virtuellen Postfach, wobei das interne Kommunikationsnetz eine Server-Schnittstelle aufweist, die zur Spiegelung von ein- und ausgehenden Kommunikationsvorgängen auf virtuelle Postfächer eingerichtet ist derart, dass jeder von dem wenigstens einen externen Teilnehmer stammender Kommunikationsvorgang sowohl in einem Postfach eines internen Teilnehmers als Adressaten dieses Kommunikationsvorgangs als auch in dem virtuellen Postfach abgelegt wird, und jeder von einem Postfach eines internen Teilnehmers an den externen Teilnehmer gerichteter Kommunikationsvorgang sowohl an den wenigstens einen externen Teilnehmer zugesendet als auch in dem virtuellen Postfach abgelegt wird;

Veröffentlichen des virtuellen Postfachs für wenigstens einen ausgewählten internen Teilnehmer derart, dass der wenigstens eine interne Teilnehmer einen von dem externen Teilnehmer eingehenden Kommunikationsvorgang an andere interne Teilnehmer sehen und sich daher mit den anderen internen Teilnehmern abstimmen kann.

Als Kommunikationsvorgang wird im Sinne der Erfindung jeder Austausch von Informationen verstanden, die über ein Kommunikationsnetz elektronisch ausgetauscht werden können, also insbesondere eine elektronische Nachricht (sog. E-Mail), Chat-Nachricht, Sprachnachricht, Kurznachricht (SMS), ein Telefongespräch oder VolP-Gespräch, ein Fax, eine elektronische Briefkopie, eine Videonachricht, etc. Ein Kommunikationsnetz ist im Sinne der Erfindung eine Struktur, die zum Austausch von Kommunikationsdaten zwischen einer Vielzahl von Endpunkten eingerichtet ist, und sich zu diesem Zweck eines oder mehrerer für Kommunikationsnetze festgelegter Protokolle wie etwa TCP/IP, ISDN, FTP oder dergleichen bedient. Als internes Kommunikationsnetz ist im Sinne der Erfindung ein Kommunikationsnetz zu verstehen, das nur einem beschränkten Teilnehmerkreis über autorisierte Zugänge zugänglich ist, wie etwa ein LAN, insbesondere Firmennetz, oder dergleichen, wobei ein interner Teilnehmer jeder Teilnehmer, der autorisierten Zugang zu einem Kommunikationsknotenpunkt oder Kommunikationsendpunkt innerhalb des internen Kommunikationsnetzes hat, sein kann und ein externer Teilnehmer jede Instanz ist, die außerhalb des internen Kommunikationsnetzes angeordnet ist, aber in der Lage ist, über ein externes Kommunikationsnetz wie etwa das Internet, ein Telefonnetz, ein Funknetz oder dergleichen mit dem internen Kommunikationsnetz zu kommunizieren. Als intern wird auch ganz allgemein im Sinne der Erfindung und im Rahmen dieser Anmeldung alles bezeichnet, was dem internen Kommunikationsnetz angehört, und als extern wird alles bezeichnet, was dem internen Kommunikationsnetz nicht angehört. Ein Postfach ist im Sinne der Erfindung ein Dienst, der einen Zugriff auf darin abgelegte Kommunikationsvorgänge wie etwa Nachrichten erlaubt. Üblicherweise ist jedem internen Teilnehmer ein Postfach zugeordnet, in welchem der Kommunikationsverkehr des internen Teilnehmers abgelegt ist, wobei die Zuordnung über eine Teilnehmerkennung des internen Teilnehmers hergestellt wird. Üblicherweise sind alle ein- und ausgehenden Kommunikationsvorgänge in einer durch einen Server verwalteten zentralen Datenbank, wie etwa einer Nachrichtendatenbank, als jeweilige Datenelemente gespeichert. (Sofern der Kommunikationsvorgang eine elektronische Nachricht ist, kann das Datenelement im Wesentlichen mit der Nachricht identisch sein, aber auch zusätzliche Informationen wie ein Zeitstempel, Hinweise auf vorangegangene Nachrichten, auf welche sich die Nachricht bezieht, persönliche Notizen etc. mit enthalten. In Fällen einer Sprachkommunikation kann das Datenelement beispielsweise Rohdaten eines Telefon- oder VolP-Kontakts wie etwa Zeitpunkt, Dauer und Anschlusskennungen der beteiligten Teilnehmer, ggf. einen Audio-Stream und/oder ein über eine ASR-Maschine erzeugtes Gesprächsprotokoll enthalten, in Fällen eines Videokontakts ggf. auch einen Image-Stream, in anderen Fällen beispielsweise Bilddaten oder pdf-Kopien oder OCR-Daten eines Faxes, übermittelte Bild- oder Videobotschaften oder dergleichen.) Der Postfach-Dienst kann eine Datenstruktur aufbauen, die Verweise auf die entsprechenden Datenelemente in der zentralen Datenbank enthält. Die Datenstruktur kann bei jedem Aufruf des Dienstes durch einen Client und nur für die Dauer einer Aktivität durch den Teilnehmer aufgebaut werden oder dauerhaft in einem nichtflüchtigen Speicher oder Massenspeicher angelegt und bei einem neuen Aufruf mit seit dem letzten Beenden neu hinzugekommenen Kommunikationsvorgängen aktualisiert werden. Unter einem Ablegen eines Kommunikationsvorgangs in einem Postfach ist dabei die Aufnahme eines Verweises auf das Datenelement in der zentralen Datenbank zu verstehen. Das Postfach kann einem Benutzer, der zum Zugriff auf das Postfach autorisiert ist, in Form einer Liste dargestellt werden, aus welcher der Benutzer eine oder mehrere Nachrichten auswählen und die ausgewählten Kommunikationsvorgänge vollständig darstellen, umsortieren oder auch aus dem Postfach löschen kann. Grundsätzlich kann der Postfach-Dienst als Datenstruktur auch eine eigene Postfach-Datenbank für den jeweiligen Teilnehmer aufbauen, in welcher Kopien, also wenigstens im Wesentlichen vollständige Wiedergaben, der Kommunikationsvorgänge des jeweiligen internen Teilnehmers aufgenommen sind; in diesem Fall ist das Ablegen eines Kommunikationsvorgangs mit einem Einstellen einer vollständigen Wiedergabe des Kommunikationsvorgangs in der Postfach-Datenbank gleichzusetzen. Der Postfach-Dienst kann von einem Kommunikations-Server oder einem Kommunikations-Client des Benutzers durchgeführt werden; es sind auch Mischlösungen denkbar. Unter einem virtuellen Postfach wird im Sinne der Erfindung ein Postfach verstanden, das keinem internen Teilnehmer speziell zugewiesen ist. Ein virtuelles Postfach kann beispielsweise Kommunikationsvorgänge abbilden, die bestimmte Kriterien erfüllen wie etwa einen bestimmten Zeitbereich eines Datumsstempels, die Erkennung als Spam, oder dergleichen, und für Verwaltungszwecke verwendet werden.

Die vorliegende Erfindung gemäß diesem Gesichtspunkt ist dadurch gekennzeichnet, dass für wenigstens einen externen Teilnehmer ein diesem zugeordnetes, für diesem aber unsichtbares oder unzugängliches virtuelles Postfach eingerichtet wird, jeder Kommunikationsvorgang, der dem wenigstens einen externen Teilnehmer anhand einer diesem zuordenbaren, dem Kommunikationsvorgang entnehmbaren Kennung als zugehörig erkannt wurde, in dem virtuellen Postfach abgelegt wird, und das virtuelle Postfach für alle oder für wenigstens einen ausgewählten internen Teilnehmer, also allen internen Teilnehmern oder dem wenigstens einen ausgewählten internen Teilnehmer, veröffentlicht wird. Eine Kennung ist im Sinne der Erfindung eine in einem Kommunikationsvorgang enthaltene Information, die einen Rückschluss auf einen Teilnehmer des Kommunikationsvorgangs erlaubt, wie etwa eine E-Mail-Adresse, eine Telefon- oder Faxnummer, ein Chatname, ein Aktenzeichen, eine Ticket-Nr., ein Suchbegriff im Betreff oder im Nachrichtentext, aber auch ein Adressenbereich wie etwa "alle E-Mail-Adressen einer bestimmten Domäne" (mit anderen Worten, eine URL) oder dergleichen sein. Unter einem Veröffentlichen des virtuellen Postfachs ist im Sinne der Erfindung zu verstehen, dass das virtuelle Postfach einen Zugriff durch die internen Teilnehmer erlaubt, wobei der Zugriff jedenfalls ein Lesen beinhaltet. In vielen Fällen ist ein Lesen ausreichend und daher vorzugsweise der Zugriff auch auf ein Lesen beschränkt. Es kann jedoch Gründe geben, auch Veränderungen zu erlauben, etwa durch einen Administrator. Das Veröffentlichen des virtuellen Postfachs bedeutet also, dass die in dem virtuellen Postfach abgelegten Kopien der Kommunikationsvorgänge für die internen Teilnehmer zumindest sichtbar sind.

Dadurch, dass das virtuelle Postfach zum Lesen für alle oder wenigstens einen internen Teilnehmer veröffentlicht wird, kann der interne Teilnehmer nicht nur seinen eigenen Kommunikationsverkehr, sondern auch den Kommunikationsverkehr anderer interner Teilnehmer mit dem externen Teilnehmer einsehen und/oder bei einer nachfolgenden Beratung des externen Teilnehmers berücksichtigen. Dadurch kann der Gesamtheit der internen Teilnehmer (also beispielsweise die Gesamtheit aller Mitarbeiter einer Firma innerhalb eines Firmennetzes), einer ausgewählten Gruppe davon, oder lediglich einem davon eine konsistente Kommunikation mit dem externen Teilnehmer ermöglicht werden. Antworten eines internen Teilnehmers auf eingehende Kommunikationsvorgänge (z.B. E-Mails) können sofort von den anderen internen Teilnehmern gesehen werden, und Antworten eines internen Teilnehmers können auf bereits gegebene Antworten anderer interner Teilnehmer abgestimmt werden. Auch kann ein interner Teilnehmer jeden von dem externen Teilnehmer eingehenden Kommunikationsvorgang an andere interne Teilnehmer sehen und können sich daher die internen Teilnehmer abstimmen.

Grundsätzlich ist es demnach möglich, dass alle internen Teilnehmer Zugriff auf das virtuelle Postfach haben. Wenn der Zugriff auf das virtuelles Postfach auf einen ausgewählte Teilnehmer beschränkt wird, kann einerseits sichergestellt werden, dass nur diejenigen Teilnehmer mit Kommunikationsvorgängen mit einer externen Person behelligt werden, die mit der externen Person zu tun haben oder zu tun haben können, und kann andererseits vermieden werden, dass private Kontakte eines internen Teilnehmers innerhalb des internen Kommunikationsnetzes offengelegt werden. Die Auswahl der Teilnehmer kann beispielsweise über die Zuweisung von Zugriffsberechtigungen erfolgen.

Dadurch, dass das virtuelle Postfach für den wenigstens einen externen Teilnehmer unsichtbar oder unzugänglich, beispielsweise nicht zugreifbar oder den wenigstens einen externen Teilnehmer nicht direkt kommunizierbar ist, kann die Möglichkeit einer internen Abstimmung nach außen verschleiert werden.

In einer konkreteren Ausgestaltung der Erfindung ist eine Vielzahl von virtuellen Postfächern angelegt, die jeweils wenigstens einem externen Teilnehmer zugeordnet sind.

In einer Weiterbildung der Erfindung weist das Verfahren den Schritt auf:
Anlegen eines neuen virtuellen Postfachs oder Ablegen in einem temporären virtuellen Postfach, wenn ein Kommunikationsvorgang keinem einem bereits bestehenden virtuellen Postfach zugeordneten externen Teilnehmer als zugehörig erkannt wird. Auf diese Weise kann beispielsweise einem Administrator die Möglichkeit gegeben werden, einen bislang unbekannten externen Teilnehmer zu erfassen, eine bislang unbekannte Kennung eines an sich bekannten externen Teilnehmers zu erkennen und einem bestehenden virtuellen Postfach zuzuordnen, und dergleichen mehr. Zu diesem Zweck können die neu angelegten virtuellen Postfächer als solche kenntlich gemacht werden und nach Bearbeitung entweder gelöscht werden, wenn die darin enthaltenen Kommunikationsvorgänge einem bestehenden virtuellen Postfach zugeordnet werden können, oder als virtuelle Postfächer für die jeweiligen neuen externen Teilnehmer belassen werden.

In einer Weiterbildung der Erfindung weist das Verfahren die Schritte auf:
Bereitstellen einer Liste mit Kommunikationsvorgängen eines internen Teilnehmers; und
Hinzufügen von Kommunikationsvorgängen aus einer oder mehreren virtuellen Postfächern zu der Liste, wenn die Kommunikationsvorgänge einen Teilnehmer betreffen, mit welchem der interne Teilnehmer kommuniziert hat oder kommuniziert oder zu kommunizieren sich anschickt, und soweit die Kommunikationsvorgänge nicht bereits in der Liste enthalten sind. Das Bereitstellen einer Liste mit eigenen Kommunikationsvorgängen des internen Teilnehmers ist von üblichen Postfachfunktionen umfasst. Wenn die Kommunikationsvorgänge aus einer oder mehreren virtuellen Postfächern externer Teilnehmer zu der Liste hinzugefügt werden, ist es für den internen Teilnehmer möglich, unmittelbar zu erkennen, welche Kommunikationsvorgänge zwischen anderen internen Teilnehmern und dem externen Teilnehmer bereits stattgefunden haben, auch wenn der interne Teilnehmer an dem Kommunikationsvorgang nicht, auch nicht in Kopie, involviert war. Das erleichtert die Abstimmung der eigenen Kommunikation mit dem externen Teilnehmer, und befreit den internen Teilnehmer auch von der Notwendigkeit, andere interne Teilnehmer im Verteiler zu berücksichtigen, da diese die eigene Kommunikation mit dem externen Teilnehmer ebenfalls angezeigt bekommen. Unter einem Anschicken zur Kommunikation kann beispielsweise das Eingeben einer Adresse eines externen Teilnehmers in ein Adressfeld, das Wählen einer Telefonnummer eines externen Teilnehmers oder dergleichen verstanden werden, woraufhin nach dem Verfahren selbsttätig Kommunikationsvorgänge anderer interner Teilnehmer mit dem externen Teilnehmer angezeigt werden.

In einer Weiterbildung der Erfindung ist die Hinzufügung von Kommunikationsvorgängen aus virtuellen Postfächern auf diejenigen virtuellen Postfächer beschränkt, von denen wenigstens eine Kennung mit wenigstens einer Kennung eines durch den internen Teilnehmer in der dem internen Teilnehmer bereitgestellten Liste ausgewählten Kommunikationsvorgangs übereinstimmt. Mit anderen Worten, der interne Teilnehmer erhält, wenn er einen Kommunikationsvorgang aus seinem Postfach auswählt, also beispielsweise anklickt, markiert oder öffnet, die mit den in den ausgewählten Kommunikationsvorgang involvierten externen Personen geführten Kommunikationsvorgänge angezeigt, auch wenn er selbst in diese Kommunikationsvorgänge nicht involviert war. Gleichzeitig bleibt der interne Teilnehmer von anderen Kommunikationsvorgängen mit externen Personen, die ihn momentan möglicherweise gar nicht interessieren, verschont.

In einer Weiterbildung der Erfindung ist die Hinzufügung von Kommunikationsvorgängen aus virtuellen Postfächern durch den internen Teilnehmer zu- und abwählbar. Dadurch kann der interne Teilnehmer die Übersichtlichkeit und Handhabbarkeit seiner Postfachliste optimieren.

In einer Weiterbildung der Erfindung weist das Verfahren den Schritt auf: Hervorheben eines Kommunikationsvorgangs in der Liste derart, dass erkennbar ist, ob der Kommunikationsvorgang einem virtuellen Postfach oder dem eigenen Postfach der internen Person zugeordnet ist. Das vereinfacht die Handhabung und beseitigt die Notwendigkeit, jeweils zu prüfen, ob man selbst an dem Kommunikationsvorgang beteiligt war.

In einer Weiterbildung der Erfindung weist das Verfahren die Schritte auf: Erkennen eines privaten Charakters eines Kommunikationsvorgangs, und Ausnehmen eines Kommunikationsvorgangs, dessen privater Charakter erkannt wurde, von dem Ablegen in dem virtuellen Postfach. Der private Charakter eines Kommunikationsvorgangs kann beispielsweise über ein von der internen Person, die an dem Kommunikationsvorgang beteiligt ist, zu setzendes Kennzeichen kenntlich gemacht werden.

Die Erfindung richtet sich auch auf jede Vorrichtung, die zur Ausführung des oben beschriebenen Verfahrens eingerichtet ist. Die Aufgabe der vorliegenden Erfindung wird durch diese Vorrichtung aus denselben Gründen gelöst, wie diese weiter oben für das entsprechende Verfahren angegeben wurden. Bei der Vorrichtung kann es sich um ein einzelnes Gerät wie etwa eine Arbeitsstation, ein Mail-Server-Rechner, Smartphone, Tablett-Computer, Laptop oder dergleichen, ein Modul wie etwa eine Platine zum Einbau in ein Gerät, oder ein aus mehreren Einzelgeräten und/oder Modulen bestehendes System oder Rechennetz mit untereinander verbundenen Geräten und/oder Modulen.

Es versteht sich, dass das Verfahren auch in einem Computerprogramm, einem Softwareprodukt oder einem digitalen Speichermedium verkörpert sein kann.

Weitere Merkmale, Aufgaben, Vorteile und Einzelheiten der vorliegenden Erfindung werden aus der nachstehenden Beschreibung konkreter Ausführungsbeispiele und ihrer zeichnerischen Darstellung in den beigefügten Figuren noch deutlicher werden. Es versteht sich, dass Merkmale, Aufgaben, Vorteile und Einzelheiten einzelner Ausführungsbeispiele auf andere Ausführungsbeispiele übertragbar sind und auch im Zusammenhang mit den anderen Ausführungsbeispielen als offenbart gelten sollen, soweit dies nicht aus technischen oder naturgesetzlichen Gründen offensichtlich abwegig ist. Ausführungsbeispiele können miteinander kombiniert werden, und die Kombination kann ebenfalls als Ausführungsbeispiel der Erfindung verstanden werden.

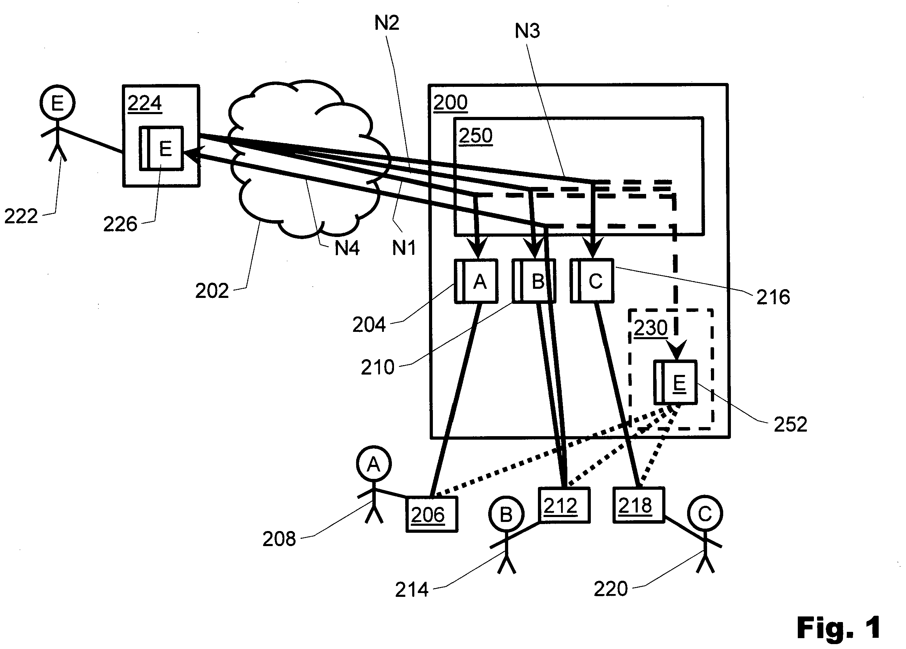

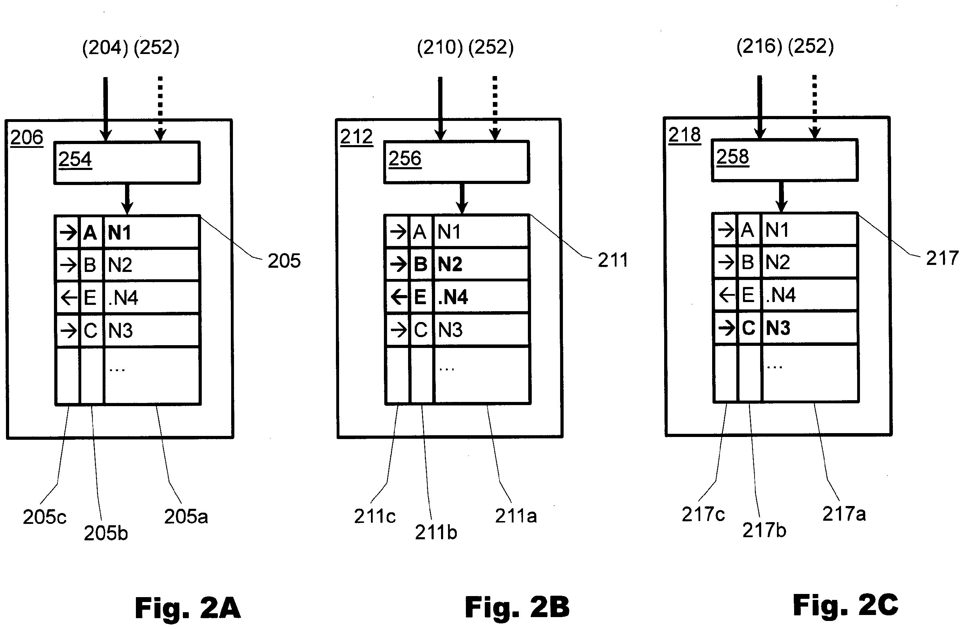

Im Folgenden wird die Erfindung anhand bevorzugter Ausführungsbeispiele und mit Hilfe von Figuren näher beschrieben. Dabei
- ist Fig. 1: ein Blockschema zur Veranschaulichung einer Nachrichtenhandhabung durch einen Mail-Server in einem Ausführungsbeispiel der vorliegenden Erfindung;
- sind Fig. 2A bis 2C: Blockschemata zur Veranschaulichung einer Nachrichtendarstellung durch Mail-Clients jeweiliger internen Personen in einem Ausführungsbeispiel der vorliegenden Erfindung;
- ist Fig. 3: ein Blockschema zur Veranschaulichung einer Nachrichtenhandhabung durch einen Mail-Server im Stand der Technik;
- sind Fig. 4A bis 4C: Blockschemata zur Veranschaulichung einer Nachrichtendarstellung durch Mail-Clients jeweiliger interner Personen im Stand der Technik;
- ist Fig. 5: ein Blockschema zur Veranschaulichung einer Nachrichtenhandhabung durch einen Mail-Server einem anderen Stand der Technik;
- ist Fig. 6: ein Blockschema zur Veranschaulichung einer Nachrichtenhandhabung durch einen Mail-Server in einem weiteren Stand der Technik;
- ist Fig. 7: ein Blockschema zur Veranschaulichung einer Nachrichtenhandhabung durch einen Mail-Server in einem noch weiteren Stand der Technik; und

- ist Fig. 8: ein Blockschema zur Veranschaulichung einer Nachrichtenhandhabung durch einen Mail-Server in einem letzten Stand der Technik.

Die Figuren sind schematisch und nicht notwendigerweise maßstabsgetreu. Die zeichnerischen Darstellungen und Beschreibungen hiervon sind zur beispielhaften Veranschaulichung des Prinzips der Erfindung gedacht und sollen diese in keiner Weise einschränken.

### <Grundlegendes Ausführungsbeispiel>

Ein grundlegendes Ausführungsbeispiel der vorliegenden Erfindung ist in Fig. 1 veranschaulicht. Gemäß der Darstellung in Fig. 1 ist ein Mail-Server 200 eines Firmennetzwerks einer Firma XYZ vorgesehen, der über nicht näher dargestellte Mittel wie etwa ein Gateway und dergleichen mit dem Internet 202 verbunden ist. Der Mail-Server 200 verwaltet ein Postfach 204, auf welches ein Mail-Client 206 zugreifen kann. Das bedeutet, der Mail-Client 206 kann in dem Postfach 204 abgelegte Nachrichten sehen und darstellen, und erlaubt auch Manipulationen wie etwa das Löschen, Kennzeichnen (etwa als Spam) von Nachrichten und dergleichen. Ferner kann der Mail-Client 206 auch Nachrichten über das Postfach 204 absetzen, d. h., den Mail-Server 200 veranlassen, eine Nachricht mit der Kennung des Postfachs 204 zu versenden. Dieser umfassende Verwaltungszugriff ist in der Figur durch eine durchgezogene Linie symbolisiert. Der Mail-Client 206 ist beispielsweise in einem Arbeitsplatzrechner eingerichtet, auf welchem eine Person 208 (Person A) ein Benutzerprofil besitzt. Anstelle eines Arbeitsplatzrechners kann der Mail-Client 206 auch auf einem Smartphone, Tablet oder Laptop oder sonstigen Gerät eingerichtet sein. Im Folgenden wird das Postfach 204 auch als Postfach der Person A bezeichnet, da es exklusiv für die Person A (208) eingerichtet und dieser zugeordnet ist. Das Postfach 204 kann von außen über das Internet 202 beispielsweise über die Adresse personA@firmaXYZ.com angesprochen werden.

Gleichermaßen verwaltet der Mail-Server 200 ein Postfach 210 einer Person B, auf welches ein Mail-Client 212 einer Person 214 (der Person B) umfassend zugreifen kann und welches beispielsweise über die Adresse personB@firmaXYZ.com angesprochen werden kann, und ein Postfach 216 einer Person C, auf welches ein Mail-Client 218 einer Person 220 (der Person C) umfassend zugreifen kann und welches beispielsweise über die Adresse personC@firmaXYZ.com angesprochen werden kann.

Es sei angenommen, dass eine externe Person 222 (Person E) über nicht näher dargestellte Mittel Zugriff auf einen Mail-Server 224 mit einem Postfach 226 besitzt, das beispielsweise über das Internet 202 mit der Kennung personE@fremderServer.net angesprochen werden kann. Es sei ferner angenommen, dass die Person E drei Nachrichten N1, N2, N3 an die internen Personen A, B, C sendet. D. h., die Person E veranlasst den externen Mail-Server 224, die Nachrichten N1, N2, N3 unter Verwendung der Adressen der Postfächer 204, 210, 216 über das Internet zu senden. Wie in den Beispielen nach dem Stand der Technik sei schließlich angenommen, dass die Person B auf die Nachricht N2 mit einer Nachricht N4 antwortet.

Wie in Fig. 1 gezeigt, weist der Mail-Server 200 eine Server-Schnittstelle 250 auf, welche in nachstehend zu beschreibender Weise zur Spiegelung von ein- und ausgehenden Nachrichten auf virtuelle Postfächer eingerichtet ist. In der Figur ist ein solches virtuelles Postfach 252 beispielhaft für eine beliebige Anzahl von virtuellen Postfächern dargestellt. Das virtuelle Postfach 252 ist der externen Person E, mit anderen Worten, der Kennung des von der externen Person E genutzten Postfachs 226, zugeordnet. Der Mail-Server 200 ist eingerichtet, auf explizite Weisung eines Benutzers und/oder eines Administrators und/oder durch automatisierte Regeln virtuelle Postfächer für externe Personen dynamisch anzulegen und zu verwalten. Der Mail-Server 200 ist auch eingerichtet, einem virtuellen Postfach mehrere Aliase, d. h., Alternativkennungen, einer externen Person zuzuordnen. Die Server-Schnittstelle 250 ist nun eingerichtet, jedweden Nachrichtenverkehr, der die externe Person E betrifft, auf das dieser Person zugeordnete virtuelle Postfach 252 zu spiegeln, d. h., jede von dieser Person E stammende Nachricht sowohl in dem Postfach des Adressaten als auch in dem virtuellen Postfach 252 abzulegen, und jede von einem Postfach 204, 210, 216 einer internen Person A, B, C an die externe Person E gerichtete Nachricht sowohl über das Internet an die Person E zu senden als auch in dem virtuellen Postfach 252 abzulegen.

Gemäß der Darstellung in Fig. 1 weist jeder Mail-Client 206, 212, 218 der internen Personen A, B, C nicht nur direkten Zugriff auf das jeweils eigene Postfach 204 bzw. 210 bzw. 216, sondern sieht auch den gesamten in dem virtuellen Postfach 252 abgelegten Nachrichtenverkehr (punktierte Linien). Dabei sind die Mail-Clients 206, 212, 218 eingerichtet, Doubletten des eigenen Postfachs 204 bzw. 210 bzw. 216 zu erkennen und eine doppelte Darstellung zu vermeiden.

In Fign. 2A-2C ist der Sachverhalt aus der Sichtweise der Personen A, B, C auf den Nachrichtenverkehr mit der externen Person E genauer dargestellt. Genauer gesagt ist in Fig. 2A die Sichtweise der Person A auf eine durch den Mail-Client 206 dargestellte Nachrichtenliste (Postbox) 205 des Postfachs 204, ist in Fig. 2B die Sichtweise der Person B auf eine durch den Mail-Client 212 dargestellte Nachrichtenliste (Postbox) 211 des Postfachs 210, und ist in Fig. 2C die Sichtweise der Person C auf eine durch den Mail-Client 218 dargestellte Nachrichtenliste (Postbox) 217 des Postfachs 216 jeweils genauer dargestellt.

Gemäß der Darstellung in Fig. 2A weist der Mail-Client 206 der Person A eine Client-Schnittstelle 254, welche mit dem eigenen Postfach 204 der Person A und mit dem virtuellen Postfach 252 verbunden ist, und eine Nachrichtenliste 205 auf. Die Nachrichtenliste 205 ist tatsächlich eine Darstellungsform einer Nachrichtendatenbank in Form einer Tabelle, die der Person A auf einem geeigneten Anzeigegerät (nicht näher dargestellt) angezeigt wird. Die Nachrichtenliste 205 weist eine Vielzahl von Spalten auf, von denen in der Figur eine Betreffspalte 205a, eine Personenspalte 205b und eine Richtungsspalte 205c dargestellt sind. Weitere Spalten können beispielsweise ein Eingangs- oder Ausgangsdatum, eine Priorität, eine Nachrichtengröße, ein Erledigungskennzeichen, Hinweise auf Dateianhänge oder anderes beinhalten. Einträge zu ein und derselben Nachricht sind in der Nachrichtenliste 205 jeweils in einer Zeile dargestellt. Die Client-Schnittstelle 254 sieht demnach sowohl Nachrichten, die in dem eigenen Postfach 204 abgelegt sind, als auch Nachrichten, die in dem virtuellen Postfach 252 der externen Person E abgelegt sind, und stellt sie in der Nachrichtenliste 205 der Person A dar. Da das virtuelle Postfach 252 auch Nachrichten enthält, die auch in dem eigenen Postfach 204 abgelegt sind, da sie an die Person A gerichtet waren oder von der Person A stammen (auch als eigene Nachrichten bezeichnet), und es unübersichtlich wäre, wenn in der Nachrichtenliste 207 solche eigenen Nachrichten doppelt auftauchen, ist die Client-Schnittstelle 254 eingerichtet, die eigenen Nachrichten der Person A aus den Nachrichten des virtuellen Postfachs 252 zu filtern bzw. deren Anzeige in der Nachrichtenliste 205 zu blockieren. Somit taucht jede Nachricht, die sowohl in dem eigenen Postfach 204 als auch in dem virtuellen Postfach 252 abgelegt ist, nur einmal in der Nachrichtenliste 207 auf.

Genauer gesagt, erscheint in der Nachrichtenliste 205 nicht nur der mit der Person A geführte Nachrichtenverkehr, sondern sowohl die an Person A gerichtete Nachricht, die Person B gerichtete Nachricht N2 sowie deren Antwort (Nachricht) N4, und die an die Person C gerichtete Nachricht N3. Dabei ist die Antwortnachricht N4 der Person B in eine Zeile unterhalb der an die Person B gerichteten Nachricht N2 gereiht, eingerückt und im Gegensatz zum fett dargestellten eigenen Nachrichtenverkehr mager dargestellt, sodass eine intuitive optische Zuordnung gewährleistet ist; in einer zusätzlichen, nicht näher dargestellten Option können mehrere hin und her gehende Nachrichten und Antwortnachrichten in Form eines Baums miteinander verknüpft sein bzw. durch immer weiteres Einrücken kenntlich gemacht werden. Alternativ kann auch eine andere Reihung der Nachrichten bevorzugt werden. So kann beispielsweise eine Reihung nach zeitlicher Abfolge erfolgen.

Gemäß der Darstellung in Fig. 2B weist der Mail-Client 212 der Person B eine Client-Schnittstelle 256, welche mit dem eigenen Postfach 210 der Person B und mit dem virtuellen Postfach 252 verbunden ist, und eine Nachrichtenliste 211 auf. Bezüglich des Aufbaus und der Eigenschaften der Nachrichtenliste 211 wird auf die Beschreibung der Nachrichtenliste 205 der Person A verwiesen. Die Client-Schnittstelle 256 sieht sowohl Nachrichten, die in dem eigenen Postfach 210 der Person B abgelegt sind, als auch Nachrichten, die in dem virtuellen Postfach 252 der externen Person E abgelegt sind, und stellt sie in der Nachrichtenliste 211 der Person B dar, wobei ein doppeltes Listen eigener Nachrichten analog vorstehender Beschreibung zu Fig. 2A vermieden wird.

Gemäß der Darstellung in Fig. 2C weist der Mail-Client 216 der Person C eine Client-Schnittstelle 258, welche mit dem eigenen Postfach 214 der Person C und mit dem virtuellen Postfach 252 verbunden ist, und eine Nachrichtenliste 217 auf. Bezüglich des Aufbaus und der Eigenschaften der Nachrichtenliste 217 wird auf die Beschreibung der Nachrichtenliste 205 der Person A verwiesen. Die Client-Schnittstelle 258 sieht sowohl Nachrichten, die in dem eigenen Postfach 216 der Person C abgelegt sind, als auch Nachrichten, die in dem virtuellen Postfach 252 der externen Person E abgelegt sind, und stellt sie in der Nachrichtenliste 217 der Person B dar, wobei ein doppeltes Listen eigener Nachrichten analog vorstehender Beschreibung zu Fig. 2A vermieden wird.

Zusammengefasst erscheint in jeder der Nachrichtenlisten 205, 211, 217 gemäß der Darstellung in Fign. 2A-2C nicht nur der mit der jeweiligen Person geführte Nachrichtenverkehr, sondern sowohl alle von der externen Person E an jede interne Person A, B, C gerichteten Nachrichten N1-N3 also auch die Antwortnachricht N4 der Person B. Somit hat jede der Personen A, B, C vom gesamten Nachrichtenverkehr mit der externen Person E Kenntnis und kann ggf. eine eigene Antwort, soweit noch erforderlich, mit der Antwort N4 der Person B abstimmen. Natürlich ist es auch möglich, dass vor einer Antwort sich die Person B mit den anderen Personen A und C ins Benehmen setzt und diese gemeinsam ein konsistentes Vorgehen miteinander abstimmen.

Es versteht sich, dass das virtuelle Postfach 252 nur intern sichtbar ist, aber nicht von extern, sodass die interne Abstimmung nach außen nicht transparent ist. D. h., das virtuelle Postfach 252 ist in einem internen Bereich 230 angesiedelt wie auch alle weiteren virtuellen Postfächer. Es ist auch möglich, den Personenkreis, der auf das virtuelle Postfach 252 Zugriff hat, einzuschränken; in diesem Fall ist es auch möglich, dass Nachrichten der Person E, die an eine aus dem genannten Personenkreis ausgeschlossene interne Personen direkt gerichtet sind, durch die Server-Schnittstelle 250 geblockt werden oder an einen Administrator oder eine andere Entscheidungsinstanz geleitet werden.

Es versteht sich ferner, dass neben dem virtuellen Postfach 252 noch eine Vielzahl von weiteren virtuellen Postfächern mit den Client-Schnittstellen 254, 256, 258 verbindbar sein können, je nachdem, wie viele virtuelle Postfächer eingerichtet sind und welche virtuellen Postfächer für die Personen A, B, C sichtbar sein sollen.

Obschon die vorliegende Erfindung anhand eines Ausführungsbeispiels beschrieben und dargestellt wurde, das sich auf elektronischen Nachrichtenverkehr (e-Mails) bezieht, ist die vorliegende Erfindung auch auf andere Kommunikationsvorgänge anwendbar bzw. ausweitbar. Beispielsweise können auch telefonische Nachrichten, die über ein nicht näher dargestelltes Telefonnetz ausgetauscht werden, VolP-Nachrichten oder Chat-Einträge, die über das Internet 202 ausgetauscht werden, Fax-Nachrichten, die über das Telefonnetz ausgetauscht werden, oder dergleichen in das virtuelle Postfach 252 gespiegelt werden. Hierzu kann der Mail-Server 202 entsprechende Dienste wie etwa einen Sprachanalysedienst zur Umwandlung von Sprachnachrichten in Text, einen VolP-Dienst, einen Chat-Dienst, einen OCR-Dienst zur Erkennung von Textinhalten und einen Bilddigitalisierungsdienst zur Erkennung von Bildinhalten in Faxnachrichten, oder dergleichen aufweisen. Insbesondere ist die Erfindung auch auf Unified-Communication-Systeme angewendet werden, in welchen zusätzlich zum elektronischen Nachrichtenverkehr auch andere Kommunikationsdaten mit einbezogen werden. So könnte ein Benutzer beispielsweise Kenntnis erhalten, mit wem die externe Person E das letzte Mal sprach bzw. von wem in der Firma XYZ die externe Person E angerufen wurde, schon bevor ein Anruf getätigt wird.

Es ist darauf hinzuweisen, dass die bildliche Darstellung des Mail-Servers 200 allein der Verdeutlichung der erfindungsgemäßen funktionalen Zusammenhänge dient und nicht so sehr der Definition gerätetechnischer Gegebenheiten. Gerätetechnische Details wie etwa Gateway-Instanzen, Switch-Instanzen, Adressanalyseinstanzen, Nachrichtendatenbanken, Kommunikationseinheiten, Bussysteme und dergleichen mehr sind dem Fachmann wohlbekannt und wurden der Konzentration auf den Gegenstand der vorliegenden Anmeldung halber nicht näher dargestellt. Es ist für das Verständnis der Erfindung auch nicht entscheidend, ob ein Server, ein Gateway, eine Nachrichtendatenbank etc. beispielsweise in ein und demselben Gerät integriert oder auf mehrere Geräte verteilt vorgesehen sind. Es versteht sich insbesondere, dass die Integration der Schnittstelle 250 und des virtuellen Postfachs in dem Mail-Server 200 beispielhaft zu verstehen ist und die beschriebenen Funktionen auch in einer dem Mail-Server 200 zugeordneten oder nicht zugeordneten, nachgeschalteten und/oder vorgeschalteten Instanz verwirklicht sein können. Ferner können den einzelnen Mail-Clients zugeschriebene Funktionen, insbesondere zur Verwaltung der Nachrichten, auch von dem Mail-Server 200 geleistet werden.

Die unter Bezug auf die dargestellten Ausführungsformen beschriebenen Merkmale der Erfindung können auch bei anderen Ausführungsformen der Erfindung vorhanden sein, außer wenn es anders angegeben ist oder sich aus technischen Gründen von selbst verbietet.

### <Liste der Bezugszeichen und Symbole>

- 100, 200: Mail-Server
- 102, 202: Internet
- 104, 204: Postfach Person A
- 105, 205: Nachrichtenliste Person A
- 106, 206: Mail-Client Person A
- 108, 208: Person A (interne Person)
- 110, 210: Postfach Person B
- 111, 211: Nachrichtenliste Person B
- 112, 212: Mail-Client Person B
- 114, 214: Person B (interne Person)
- 116, 216: Postfach Person C
- 117, 217: Nachrichtenliste Person C
- 118, 218: Mail-Client Person C
- 120, 220: Person C (interne Person)
- 122, 222: Person E (externe Person)
- 124, 224: Mail-Server Person E
- 126, 226: Postfach Person E
- 128: Zentrales Postfach
- 130: Interner Postfachbereich
- 132: Verwaltungsinstanz
- 134: Abrbeitsstation
- 136: Administrator (interne Person)
- 138-140: Gruppenpostfächer
- 146: Kundenbeziehungsmanagementsystem (CRM)
- 250: Server-Schnittstelle
- 252: Virtuelles Postfach
- 254: Client-Schnittstelle Postfach A
- 256: Client-Schnittstelle Postfach B
- 258: Client-Schnittstelle Postfach C

- N1-N10: Nachrichten

Die vorstehende Liste der Bezugszeichen und Symbole ist integraler Bestandteil der Beschreibung.

## Patentansprüche

1. Verfahren zur Verwaltung von Kommunikationsvorgängen (N1-N4) zwischen internen Teilnehmern (A, B, C) eines internen Kommunikationsnetzes einerseits und externen Teilnehmern (E) andererseits, wobei das Verfahren in dem internen Kommunikationsnetz abläuft und **gekennzeichnet ist durch** die folgenden Schritte:
- Anlegen einer Liste in dem internen Kommunikationsnetz zur Auflistung von eingehenden und ausgehenden Kommunikationsvorgängen (N1-N4) zwischen den internen Teilnehmern (A, B, C) und wenigstens einem externen Teilnehmer (E) als virtuelles Postfach (252), das dem wenigstens einen externen Teilnehmer (E) zugeordnet ist, wobei das virtuelle Postfach (252) für den wenigstens einen externen Teilnehmer (E) unsichtbar oder unzugänglich in einem internen Bereich (230) des internen Kommunikationsnetzes angelegt wird, so dass die Möglichkeit einer internen Abstimmung der internen Teilnehmer (A, B, C) nach außen verschleiert wird;
- Erkennen eines Kommunikationsvorgangs (N1-N4) zwischen wenigstens einem internen Teilnehmer (A, B, C) und dem wenigstens einen externen Teilnehmer (E) als dem wenigstens einen externen Teilnehmer (E) zugehörig anhand einer dem Kommunikationsvorgang (N1-N4) entnehmbaren, dem wenigstens einen externen Teilnehmer (E) zuordenbaren Kennung;
- Ablegen jedes Kommunikationsvorgangs (N1-N4), der als dem externen Teilnehmer (E) zugehörig erkannt wurde, in dem virtuellen Postfach (252), wobei das interne Kommunikationsnetz eine Server-Schnittstelle (250) aufweist, die zur Spiegelung von ein- und ausgehenden Kommunikationsvorgängen (N1, N2, N3, N4) auf virtuelle Postfächer (252) eingerichtet ist derart, dass jeder von dem wenigstens einen externen Teilnehmer (E) stammender Kommunikationsvorgang (N1, N2, N3) sowohl in einem Postfach (204, 210, 216) eines internen Teilnehmers (A, B, C) als Adressaten dieses Kommunikationsvorgangs (N1, N2, N3) als auch in dem virtuellen Postfach (252) abgelegt wird, und jeder von einem Postfach (204, 210, 216) eines internen Teilnehmers (A, B, C) an den externe Teilnehmer (E) gerichteter Kommunikationsvorgang (N4) sowohl an den wenigstens einen externen Teilnehmer (E) zugesendet als auch in dem virtuellen Postfach (252) abgelegt wird;
- Veröffentlichen des virtuellen Postfachs (252) für wenigstens einen ausgewählten internen Teilnehmer (A, B, C) derart, dass der wenigstens eine interne Teilnehmer (A) einen von dem externen Teilnehmer (E) eingehenden Kommunikationsvorgang (N2, N3) an andere interne Teilnehmer (B, C) sehen und sich daher mit den anderen internen Teilnehmern (B, C) abstimmen kann.

2. Verfahren gemäß Anspruch 1, wobei
eine Vielzahl von virtuellen Postfächern (252) angelegt wird, die jeweils wenigstens einem externen Teilnehmer (E) zugeordnet sind.

3. Verfahren gemäß Anspruch 1 oder 2,
**weiter gekennzeichnet durch** den Schritt:
Anlegen eines neuen virtuellen Postfachs (252) oder Ablegen in einem temporären virtuellen Postfach (252), wenn ein Kommunikationsvorgang (N1-N4) keinem einem bereits bestehenden virtuellen Postfach zugeordneten externen Teilnehmer (E) als zugehörig erkannt wird.

4. Verfahren gemäß einem der vorstehenden Ansprüche,
**weiter gekennzeichnet durch** die Schritte:
- Bereitstellen einer Liste (205, 211, 217) mit Kommunikationsvorgängen (N1, N2 und N4, N3) eines internen Teilnehmers (A, B, C); und
- Hinzufügen von Kommunikationsvorgängen (N1-N4) aus einer oder mehreren virtuellen Postfächern (252) zu der Liste (205, 211, 217), wenn die Kommunikationsvorgänge einen externen Teilnehmer (E) betreffen, mit welchem der interne Teilnehmer (A, B, C) kommuniziert hat oder kommuniziert oder zu kommunizieren sich anschickt, und soweit die Kommunikationsvorgänge (N1-N4) nicht bereits in der Liste (205, 211, 217) enthalten sind.

5. Verfahren gemäß Anspruch 4, wobei
die Hinzufügung von Kommunikationsvorgängen (N1-N4) aus virtuellen Postfächern (252) auf diejenigen virtuellen Postfächer (252) beschränkt ist, von denen wenigstens eine Kennung mit wenigstens einer Kennung eines durch den internen Teilnehmer (A, B, C) in der dem internen Teilnehmer bereitgestellten Liste (205, 211, 217) ausgewählten Kommunikationsvorgangs (N1-N4) übereinstimmt.

6. Verfahren gemäß Anspruch 4 oder 5, wobei
die Hinzufügung von Kommunikationsvorgängen (N1-N4) aus virtuellen Postfächern (252) zu der Liste (205, 211, 217) durch den internen Teilnehmer (A, B, C) zu- und abwählbar ist.

7. Verfahren nach einem der Ansprüche 4 bis 6, wobei
unter einem Anschicken zur Kommunikation das Eingeben einer Adresse des wenigstens einen externen Teilnehmers (E) in ein Adressfeld, das Wählen einer Telefonnummer des wenigstens einen externen Teilnehmers (E) oder dergleichen verstanden wird, woraufhin nach dem Verfahren eines der Ansprüche 1 bis 6 selbsttätig Kommunikationsvorgänge anderer interner Teilnehmer (A, B, C) mit dem externen Teilnehmer (E) angezeigt werden.

8. Verfahren nach einem der Ansprüche 4 bis 7,
**weiter gekennzeichnet durch** den Schritt:
Hervorheben eines Kommunikationsvorgangs in der Liste (205, 211, 217) derart, dass erkennbar ist, ob der Kommunikationsvorgang dem virtuellen Postfach (252) oder dem eigenen Postfach (204, 210, 216) des internen Teilnehmers (A, B, C) zugeordnet ist, so dass ein Notwendigkeit beseitigt wird, jeweils zu prüfen, ob der interne Teilnehmer (A, B, C) selbst an dem Kommunikationsvorgang beteiligt war.

9. Verfahren nach einem der vorhergehenden Ansprüche,
**weiter gekennzeichnet durch** die Schritte:
Erkennen eines privaten Charakters eines Kommunikationsvorgangs, und Ausnehmen eines Kommunikationsvorgangs, dessen privater Charakter erkannt wurde, von dem Ablegen in dem virtuellen Postfach (252), wobei der private Charakter eines Kommunikationsvorgangs über ein von der internen Person (A, B, C), die an dem Kommunikationsvorgang beteiligt ist, zu setzendes Kennzeichen kenntlich gemacht wird.

10. Verfahren nach einem der vorhergehenden Ansprüche, wobei der interne Teilnehmer (A, B, C) Kenntnis erhält, mit wem die externe Person (E) das letzte Mal sprach oder von welchem internen Teilnehmer (A, B, C) die externe Person (E) angerufen wurde, schon bevor ein Anruf von dem internen Teilnehmer (A, B, C) getätigt wird.

11. Verfahren nach einem der vorhergehenden Ansprüche, wobei ein Personenkreis der internen Teilnehmer (A, B, C), der auf das virtuelle Postfach (252) Zugriff hat, eingeschränkt wird derart, dass Kommunikationsvorgänge (N1, N2, N3) der Person (E), die an eine aus dem genannten Personenkreis der internen Teilnehmer (A, B, C) ausgeschlossene interne Person direkt gerichtet sind, durch die Server-Schnittstelle (250) geblockt werden oder an einen Administrator oder eine andere Entscheidungsinstanz des internen Kommunikationsnetzes geleitet werden.

12. Vorrichtung zur Verwaltung von Kommunikationsvorgängen, wobei die Vorrichtung ausgelegt und eingerichtet ist, das Verfahren nach einem der vorstehenden Ansprüche auszuführen.

13. Computerprogramm umfassend Programmbefehle, die einen Computer dazu veranlassen, die Verfahrensschritte des Verfahrens nach einem der Ansprüche 1 bis 11 auszuführen, wenn das Computerprogramm auf den Computer geladen oder von diesem ausgeführt wird.

14. Softwareprodukt, das auf einem durch einen Computer lesbaren Medium gespeichert ist und das vorzugsweise direkt in den internen Speicher eines Computers geladen werden kann und das Programmcode zur Durchführung der Verfahrensschritte des Verfahrens nach einem der Ansprüche 1 bis 11, wenn das Computerprogramm auf dem Computer ausgeführt wird, aufweist.

15. Digitales Speichermedium, mit elektrisch lesbaren Steuersignalen, welche mit einem programmierbaren Computer arbeiten können, um Kommunikationsvorgänge zu verwalten, wobei die Steuersignale ausgelegt und angepasst sind, den Computer zu veranlassen, die Verfahrensschritte des Verfahrens nach einem der Ansprüche 1 bis 11 auszuführen.

## Claims

1. Method for managing communication processes (N1-N4) between internal participants (A, B, C) of an internal communication network on the one side and external participants (E) on the other side, wherein the method takes place in the internal communication network and is **characterized by** the following steps:
- Creation of a list in the internal communication network for the listing of incoming and outgoing communication processes (N1-N4) between the internal participants (A, B, C) and at least one external participant (E) as a virtual mailbox (252), that is assigned to the at least one external participant (E), whereby the virtual mailbox (252) for the at least one external participant (E) is located, invisible and inaccessible, in an internal area (230) of the internal communication network, in such a manner that the possibility of an internal coordination of the internal participants (A, B, C) is concealed towards the outside;
- Recognition of a communication process (N1-N4) between at least one internal participant (A, B, C) and the at least one external participant (E) as belonging to the at least one external participant (E) on the basis of an identification that can be gathered from one of the communication processes (N1-N4) that is assignable the at least one external participant (E);
- Storage, in the virtual post office (252), of every communication process (N1-N4) that was recognized as belonging to the external participant (E), whereby the internal communication network exhibits a server interface (250) that is configured to mirror the incoming and outgoing communication process (N1, N2, N3, N4) in the virtual mailbox (252) in such a manner that every communication process (N1, N2, N3) originating from an external participant (E) is stored in both a mailbox (204, 210, 216) of an internal participant (A, B,C) as addressee of this communication process (N1, N2, N3), as well as also in the virtual mailbox (252), and every communication process (N4) that is directed from a mailbox (204, 210, 216) of an internal participant (A, B, C) to the external participant (E) is both sent to the at least one external participant (E) as well as also stored in the virtual mailbox (252);
- Disclosure of the virtual mailbox (252) for at least one selected internal participant (A, B, C) in such a manner that the at least one internal participant (A) sees a communication process (N2, N3) that is incoming from the external participant (E) to the other internal participant (B, C) and can then coordinate with the other internal participants (B, C).

2. Method according to Claim 1, wherein
a plurality of virtual mailboxes (252) are created, which are each assigned to at least one external participant (E).

3. Method according to Claim 1 or 2,
**further characterized by** the step:
creation of a new virtual mailbox (252) or storage in a temporary virtual mailbox (252), when a communication process (N1-N4) is not recognized as belonging to an external participant (E) already assigned to an existing virtual mailbox.

4. Method according to one of the preceding Claims,
**further characterized by** the steps:
- Preparation of a list (205, 211, 217) with communication processes (N1, N2 and N4, N3) of an internal participant (A, B, C); and
- Addition of communication processes (N1-N4) from one or multiple virtual mailboxes (252) to the list (205, 211, 217), when the communication process refers to an external participant (E), with which the internal participant (A, B, C) has communicated, or communicates, or is preparing to communicate, and inasmuch as the communication processes (N1-N4) are not already contained in the list (205, 211, 217).

5. Method according to Claim 4, wherein
the addition of communication processes (N1-N4) from virtual mailboxes (252) is limited to those virtual mailboxes (252) from whence at least one recognition corresponds with at least one recognition of a communication process (N1-N4) selected from the list (205, 211, 217) prepared by the internal participant (A, B, C).

6. Method according to Claim 4 or 5, wherein
the addition of communication processes (N1-N4) from virtual mailboxes (252) to the list (205, 211, 217) is selectable or deselectable by the internal participant (A, B, C).

7. Method according to one of the Claims 4 through 6, wherein
when one speaks of preparation for communication, one understands the input of an address of the at least one external participant (E) in an address field, the dialing of a telephone number of the at least one external participant (E) or the like, whereupon, according of the method according to one of the Claims 1 through 6, communication processes of the other internal participants (A, B, C) with the external participant (E) are automatically displayed.

8. Method according to one of the Claims 4 through 7,
**further characterized by** the step:
Highlighting of a communication process in the list (205, 211, 217) in such a manner that it is recognizable whether the communication process is assigned to the virtual mailbox (252) or the own mailbox (204, 210, 216) of the internal participant (A, B, C), so that the need to verify each time whether the internal participant (A, B, C) was personally involved in the communication process is eliminated.

9. Method according to one of the preceding Claims,
**further characterized by** the steps:
Recognition of the private character of a communication process, and exclusion of a communication process, the private character of which has been recognized, from the storage in the virtual mailbox (252), wherein the private character of a communication process is identified by a label that is to be set by the internal person (A, B, C) who is involved in the communication process.

10. Method according to one of the preceding Claims, wherein
the internal participant (A, B, C) receives information referring to whom the external person (E) last spoke to or from which internal person (A, B, C) the external person (E) was called by, already before a call is made by the internal participant (A, B, C).

11. Method according to one of the preceding Claims, wherein
a circle of people of the internal participants (A, B, C), who have access to the virtual mailbox (252), is limited in such a manner that communication processes (N1, N2, N3) of the person (E) that are submitted directly to one of the internal persons who are excluded from the named circle of people of the internal participants (A, B, C) are blocked by the server interface (250) or are directed to an administrator or another final authority of the internal communication network.

12. Device for the management of communication processes, wherein
the device is designed or configured to carry out the method according to one of the preceding Claims.

13. Computer program comprising computer commands which enable a computer to carry out the method steps of the method according to one of the Claims 1 through 11, when the computer program is loaded on the computer or carried out by the same.

14. Software product, that is saved on a medium that is readable by a computer and preferably can be loaded directly in the internal memory of a computer, and that exhibits the program code for execution of the method steps of the method according to one of the Claims 1 through 11, when the computer program is executed on the computer.

15. Digital memory medium, with electrically legible control commands, which can work with a programmable computer, to manage communication processes, wherein the control commands are designed and adapted to permit the computer to execute the method steps of the method according to one of the Claims 1 through 11.

## Revendications

1. Procédé d'administration de processus de communication (N1-N4) entre d'une part des participants internes (A, B, C) d'un réseau de communication interne et, d'autre part, des participants externes (E), dans lequel le procédé se déroule dans le réseau de communication interne et est **caractérisé par** les étapes suivantes :
- la création d'une liste dans le réseau de communication interne pour lister des processus de communication arrivants et partants (N1-N4) entre les participants internes (A, B, C) et au moins un participant externe (E) en tant que boîte postale virtuelle (252) qui est associée à l'au moins un participant externe (E), dans lequel la boîte postale virtuelle (252) est créée invisible ou inaccessible pour l'au moins un participant externe (E) dans une zone interne (230) du réseau de communication interne de sorte que la possibilité d'un accord interne des participants internes (A, B, C) est dissimulée vis-à-vis de l'extérieur ;
- la reconnaissance d'un processus de communication (N1-N4) entre au moins un participant interne (A, B, C) et l'au moins un participant externe (E) en tant qu'appartenant à l'au moins un participant externe (E) à l'aide d'un identifiant pouvant être prélevé du processus de communication (N1-N4), associable à l'au moins un participant externe (E) ;
- le dépôt de chaque processus de communication (N1-N4), qui a été reconnu comme appartenant au participant externe (E), dans la boîte postale virtuelle (252), dans lequel le réseau de communication interne comprend une interface de réseau (250) qui est conçue pour la recopie de processus de communication arrivants et partants (N1, N2, N3, N4) dans des boîtes postales virtuelles (252) de manière que chaque processus de communication (N1, N2, N3) provenant de l'au moins un participant externe (E) est déposé aussi bien dans une boîte postale (204, 210, 216) d'un participant interne (A, B, C) en tant que destinataire de ce processus de communication (N1, N2, N3) que dans la boîte postale virtuelle (252), et chaque processus de communication (N4) adressé par une boîte postale (204, 210, 216) d'un participant interne (A, B, C) au participant externe (E) est aussi bien envoyé à l'au moins un participant externe (E) que déposé dans la boîte postale virtuelle (252) ;
- le fait de rendre publique la boîte postale virtuelle (252) pour au moins un participant interne sélectionné (A, B, C) de manière que l'au moins un participant interne (A) peut voir un processus de communication (N2, N3) arrivant du participant externe (E) au niveau d'autres participants internes (B, C) et peut par conséquent se mettre d'accord avec les autres participants internes (B, C).

2. Procédé selon la revendication 1, dans lequel une pluralité de boîtes postales virtuelles (252) sont créées, qui sont associées chacune à au moins un participant externe (E) .

3. Procédé selon la revendication 1 ou 2,
**caractérisé en outre par** l'étape :
la création d'une nouvelle boîte postale virtuelle (252) ou le dépôt dans une boîte postale virtuelle temporaire (252) lorsqu'un processus de communication (N1-N4) est reconnu comme n'appartenant pas à un participant externe (E) associé à une boîte postale virtuelle déjà existante.

4. Procédé selon l'une quelconque des revendications précédentes,
**caractérisé en outre par** les étapes :
- la préparation d'une liste (205, 211, 217) avec des processus de communication (N1, N2 et N4, N3) d'un participant interne (A, B, C) ; et
- l'ajout de processus de communication (N1-N4) à partir d'une ou de plusieurs boîtes postales virtuelles (252) à la liste (205, 211, 217) lorsque les processus de communication concernent un participant externe (E) avec lequel le participant interne (A, B, C) a communiqué ou communique ou s'apprête à communiquer, et pour autant que les processus de communication (N1-N4) ne sont pas déjà contenus dans la liste (205, 211, 217).

5. Procédé selon la revendication 4, dans lequel l'ajout de processus de communication (N1-N4) à partir de boîtes postales virtuelles (252) est limité aux boîtes postales virtuelles (252) par lesquelles au moins un identifiant concorde avec au moins un identifiant d'un processus de communication (N1-N4) sélectionné par le participant interne (A, B, C) dans la liste (205, 211, 217) préparée pour le participant interne.

6. Procédé selon la revendication 4 ou 5, dans lequel l'ajout de processus de communication (N1-N4) à partir des boîtes postales virtuelles (252) à la liste (205, 211, 217) peut être sélectionné ou désélectionné par le participant interne (A, B, C).

7. Procédé selon l'une quelconque des revendications 4 à 6, dans lequel
on comprend comme fait de s'apprêter à la communication l'entrée d'une adresse de l'au moins un participant externe (E) dans un champ d'adresse, la composition d'un numéro de téléphone de l'au moins un participant externe (E) ou une action similaire, moyennant quoi, selon le procédé de l'une quelconque des revendications 1 à 6, des processus de communication d'autres participants internes (A, B, C) avec le participant externe (E) sont affichés automatiquement.

8. Procédé selon l'une quelconque des revendications 4 à 7, **caractérisé en outre par** l'étape :
la mise en évidence d'un processus de communication dans la liste (205, 211, 217) de manière à pouvoir reconnaître si le processus de communication est associé à la boîte postale virtuelle (252) ou à la boîte postale personnelle (204, 210, 216) du participant interne (A, B, C) de sorte à supprimer une nécessité de vérifier à chaque fois si le participant interne (A, B, C) avait participé lui-même au processus de communication.

9. Procédé selon l'une quelconque des revendications précédentes,
**caractérisé en outre par** les étapes :
la reconnaissance d'un caractère privé d'un processus de communication, et le retrait d'un processus de communication, dont le caractère privé a été reconnu, du dépôt dans la boîte postale virtuelle (252), dans lequel le caractère privé d'un processus de communication est rendu reconnaissable par le biais d'un indice à définir par la personne interne (A, B, C) qui participe au processus de communication.

10. Procédé selon l'une quelconque des revendications précédentes, dans lequel le participant interne (A, B, C) apprend avec qui la personne externe (E) a parlé la dernière fois ou par quel participant interne (A, B, C) la personne externe (E) a été appelée, déjà avant qu'un appel soit effectué par le participant interne (A, B, C).

11. Procédé selon l'une quelconque des revendications précédentes, dans lequel un groupe de personnes des participants internes (A, B, C), qui a accès à la boîte postale virtuelle (252), est limité de manière que des processus de communication (N1, N2, N3) de la personne (E), qui sont adressés directement à une personne interne exclue dudit groupe de personnes des participants internes (A, B, C), sont bloqués par l'interface de réseau (250) ou sont dirigés vers un administrateur ou vers une autre instance de décision du réseau de communication interne.

12. Dispositif d'administration de processus de communication, dans lequel le dispositif est conçu et configuré pour exécuter le procédé selon l'une quelconque des revendications précédentes.

13. Programme d'ordinateur comportant des instructions de programme, qui amènent un ordinateur à exécuter les étapes de procédé du procédé selon l'une quelconque des revendications 1 à 11 lorsque le programme d'ordinateur est chargé sur l'ordinateur ou est exécuté par ce dernier.

14. Produit logiciel qui est enregistré sur un support lisible par un ordinateur et qui peut être de préférence directement chargé dans la mémoire interne d'un ordinateur et qui comprend le code de programme pour l'exécution des étapes de procédé du procédé selon l'une quelconque des revendications 1 à 11 lorsque le programme d'ordinateur est exécuté sur l'ordinateur.

15. Support d'enregistrement numérique, avec des signaux de commande électriquement lisibles qui peuvent fonctionner avec un ordinateur programmable pour administrer des processus de communication, dans lequel les signaux de commande sont conçus et adaptés pour amener l'ordinateur à exécuter les étapes de procédé du procédé selon l'une quelconque des revendications 1 à 11.
